# EUROPEAN PATENT APPLICATION

(11) **EP 4 723 765 A1**
(43) Date of publication of application: **08.04.2026**
(21) Application number: 25204385.6
(22) Date of filing: 24.09.2025
(51) Int. Cl.: H04W 64/00, H04W 72/04, H04W 16/14

(54) **COMMUNICATING SENSING AND COMMUNICATION SIGNALS**

(30) Priority: 04.10.2024 GB 202414635
(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

There is provided a method of communicating sensing and communication signals between a base station and a user equipment. The method comprises communicating, during a first radio resource allocation of a sequence of radio resource allocations allocated for sensing, a first signal comprising a sensing signal; and communicating, during a further radio resource allocation of the sequence, a second signal comprising the sensing signal and a communication signal.

## Description

### FIELD OF THE INVENTION

The present invention relates to methods of communicating sensing and communication signals between a base station and a user equipment.

### GLOSSARY

RAN - Radio Access Network
ISAC - Integrated Sensing and Communication
RF - Radio Frequency
AI - Artificial Intelligence
MIMO - Multiple-Input Multiple-Output
BPSK - Binary Phase-Shift Keying
DL - Downlink
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### BACKGROUND

Future systems for telecommunications or telecommunications networks may integrate both sensing and communications technologies. Such networks transmit both signals for sensing and signals for communication. For example, for sensing, the network may utilise radar-like signals for the purpose of detecting and tracking nearby objects. For example, for communications, the network may utilise a known communications system such as a cellular communications system.

The transmission of signals in telecommunications networks is typically multiplexed. For example, there may be a series of timeslots available for transmission of signals. Each timeslot may then be used to transmit a different signal. For example, a first timeslot may be used to transmit a sensing signal. A second timeslot may be used to transmit a communications signal. A third timeslot may be used to transmit a different communications signal. A fourth timeslot may be used to transmit a different sensing signal, and so on. Additionally or alternatively, the multiplexing may be in the frequency domain. A general time or frequency slot may be referred to as a radio resource allocation.

ISAC technology may simultaneously serve traditional wireless communication services and act as a sensor node (e.g., by providing sensing functionality similar to radar) to provide environmental sensing functionality, such as intruder detection, drone monitoring, meteorological prediction, and the like. ISAC technology may facilitate communication via one or more of: beamforming with MIMO arrays; AI model creation and training; and modulation scheme adaptation. ISAC technology may enable the network to react quickly to the changing needs of its subscribers. The sensing and communication aspects of ISAC technology may each comprise common elements, such as beamforming and phased antenna arrays. ISAC technology may further comprise channel estimation, symbol detection and object detection functionality, wherein these functions are provided by common hardware.

In prior art methods for using such telecommunications networks, it is not considered possible to transmit multiple signals in a single radio resource allocation. For example, in prior art networks, if a sensing signal and a communications signal are transmitted in a single radio resource allocation, it would not be possible for the receiver to decode the communications signal. This means that the radio resource allocations available must be divided between sending and communications in such networks. That is, in such prior art networks it is not considered possible to transmit sensing and communications signals simultaneously. This significantly impacts the efficiency of such networks.

There is, therefore, a need for a method of using a telecommunications network which allows for the simultaneous transmission of both sensing and communications signals without impairing the ability for a receiver to decode the communications signals. Such a method would have the benefit of improving energy efficiency and efficiency of the use of limited radio resources.

### SUMMARY

There is, therefore, a need for an improved method of using a telecommunications network, which allows for the simultaneous transmission of both sensing and communications signals, without impairing the ability for a receiver to decode the communications signals. Such a method would have the benefit of improving energy efficiency and efficiency of the use of radio resources, which are limited.

A first aspect of the invention provides a method of communicating sensing and communication signals between a base station and a user equipment. The method comprises (a) communicating, during a first radio resource allocation of a sequence of radio resource allocations allocated for sensing, a first signal comprising a sensing signal, and (b) communicating, during a further radio resource allocation of the sequence, a second signal comprising the sensing signal and a communication signal.

An advantage of this method is that the second signal comprising the sensing signal and a communication signal may be decomposed into a separate resultant sensing signal and resultant communications signals. The decomposition may be carried out by, for example, a user equipment. The decomposition may use the first sensing signal. The ability to decompose the second signal allows the system using the method to transmit a communications signal (that is, the signal which may become the resultant communications signal) during the further radio resource allocations, thus improving energy efficiency and efficiency of the use of limited radio resources.

The method may comprise repeating step (b) one or more times during one or more radio resource allocations of the sequence.

The method may comprise periodically determining a measure of channel condition.

The method may comprise repeating step (a) and beginning a new sequence of radio resource allocations allocated for sensing if the measure of channel condition is outside a pre-determined range.

Once a first signal comprising a sensing signal has been communicated, a system using the method may continue to communicate further signals comprising a sensing signal and a communication signal. This may continue for as long as the channel condition is suitable. Additionally or alternatively, this may continue for as long as the channel condition remains similar. That is, it may continue for as long as the channel condition is substantially unchanged. Increasing the number of times step (b) is performed further improves energy efficiency and efficiency of the use of limited radio resources by increasing the number of communications signals that can be communicated.

The measure of channel condition may be one or more of a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

The pre-determined range may be decided according to a scheduler of the base station.

The pre-determined range may be such that data transmission by binary phase shift keyring is ensured.

In other words, if the measure of channel condition indicates that the recovered signal will be corrupted to an extent that data transmission by BPSK is error prone or impossible, the base station may begin a new sequence by sending the sensing signal alone in a next resource allocation.

The method may comprise repeating step (b) a pre-determined number of times.

The method may comprise repeating step (a) and beginning a new sequence of radio resource allocations allocated for sensing.

Once a first signal comprising a sensing signal has been communicated, a system using the method may continue to communicate further signals comprising a sensing signal and a communication signal. This may continue for a pre-determined number of times. The pre-determined number may be determined according to expectations regarding how long the channel condition will remain suitable and/or how long the channel will remain similar. Increasing the number of times step (b) is performed further improves energy efficiency and efficiency of the use of limited radio resources by increasing the number of communications signals that can be communicated.

The first radio resource allocation may be temporally prior to the further radio resource allocation.

The first radio resource allocation may be temporarily subsequent to one or more of the further radio resource allocations.

Thus, it may be possible to decompose and/or recover resultant communications signals from a signal comprising a sensing signal and a communication signal even if the first sensing signal is communicated later.

If the sensing signal alone is received later, the UE may store the received combined signals and subtract the sensing signal once the sensing signal has been received.

This may be useful if the combined signal has already been sent/scheduled at the time the base station identifies that the channel condition has changed. The combined signal may be sent in any case and the sensing signal alone to enable the UE to retrieve the communications signal component of the combined signal may be provided later.

The method may comprise subtracting the signal of step (a) of a given sequence of radio resource allocations allocated for sensing from the signal of any performance of step (b) of the given sequence to produce a resultant communication signal.

This may be used as a decomposition to recover separate sensing and communications signals from a signal comprising the sensing signal and a communication signal. The decomposed communications signal may be the resultant communication signal.

A second aspect of the invention provides a user equipment of an integrated sensing and communications network for carrying out the method.

A third aspect of the invention provides a base station of an integrated sensing and communications network for carrying out the method.

A fourth aspect of the invention provides computer software comprising instructions that, when executed by a processor, cases the processor to perform the method.

In a fifth aspect, a method of communicating sensing and communication signals between a base station and a user equipment, UE, is provided. The method comprises communicating, during a first radio resource allocation, a wireless signal from the base station to the UE. The wireless signal comprises a first communication signal, a second communication signal and a sensing signal. The method further comprises communicating the wireless signal from the base station to the UE during a second radio resource allocation. The method further comprises communicating the wireless signal from the base station to the UE during a third radio resource allocation. Channel conditions between the base station and the UE are different between each of the first radio resource allocation, the second radio resource allocation, and the third radio resource allocation.

In other words, the channel conditions are different between the first radio resource allocation and the second radio resource allocation, the channel conditions are different between the first radio resource allocation and the third radio resource allocation, the channel conditions are different between the second radio resource allocation and the third radio resource allocation.

The radio resource allocation may comprise a timeslot and a frequency channel.

A plurality of radio resource allocations may be designated for sensing.

The first, second and third allocations may be ordered temporally as first, second and third.

The method may be performed by the UE.

The method may further comprise processing, by the UE, the wireless signals received during the first radio resource allocation, the second radio resource allocation, and the third radio resource allocation, and isolating the first communication signal and the second communication signal.

Processing the wireless signals may comprise solving simultaneous equations obtained based on the wireless signals received during the first radio resource allocation, the second radio resource allocation, and the third radio resource allocation and the respective first channel conditions during the first radio resource allocation, second channel conditions during the second radio resource allocation, and third channel conditions during the third radio resource allocation.

The method may further comprise determining a first measure of channel condition during the first radio resource allocation, a second measure of channel condition during the second radio resource allocation, and a third measure of channel condition during the third radio resource allocation.

The first measure of channel condition, second measure of channel condition, and/or third measure of channel condition may be one or more of a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

The method may be performed by the base station.

The method may further comprise modifying the channel condition between the first radio resource allocation and the second radio resource allocation and/or between the second radio resource allocation and the third radio resource allocation.

The method may further comprise determining a first measure of channel condition during the first radio resource allocation and a second measure of second channel condition during the second radio resource allocation, determining whether a measure of channel difference between the first radio resource allocation and the second radio resource allocation exceeds a threshold and, if not, modifying the channel condition of the second radio resource allocation.

The method may further comprise determining a second measure of channel condition during the second radio resource allocation and a third measure of channel condition during the third radio resource allocation, determining whether a measure of channel difference between the second radio resource allocation and the third radio resource allocation exceeds a threshold and, if not, modifying the channel condition of the third radio resource allocation.

Modifying the channel condition may comprise one or more of: using different transmit and/or receive antennas of the base station to communicate the wireless signal; and manipulating radio-frequency components at a transmitter and/or receiver of the base station.

The combined wireless signal may comprise a first communication signal (C1), a second communication signal (C2) and a sensing signal (S).

The combined signal (C1+C2+S) may be transmitted from the whole antenna array. Alternatively, some antennas may transmit S+C1 and other antennas may transmit C2. Alternatively, some antennas may transmit S+C2 and other antennas may transmit C1. Alternatively, the arrangement could be a mixture of these options.

The method may further comprise receiving, at the base station, a reflection of the sensing signal. The received signal may be different between timeslots. The difference between the received reflection between one timeslot and the next may be used to determine information about the environment.

In a sixth aspect, a UE configured to perform the any of the methods described above is also provided.

In a seventh aspect, a base station configured to perform the any of the methods described above is also provided.

In an eighth aspect, a computer program comprising instructions that, when executed on a processor, cause the processor to perform the any of the methods described above is also provided.

### BRIEF DESCRIPTION OF THE FIGURES

Fig. 1 shows an exemplary telecommunications system.
Fig. 2 shows an exemplary radio resource allocation multiplexing chart.
Fig. 3 shows an exemplary telecommunications method.
Fig. 4 shows an exemplary radio resource allocation multiplexing chart.
Fig. 5 shows an exemplary telecommunications method.

### DETAILED DESCRIPTION

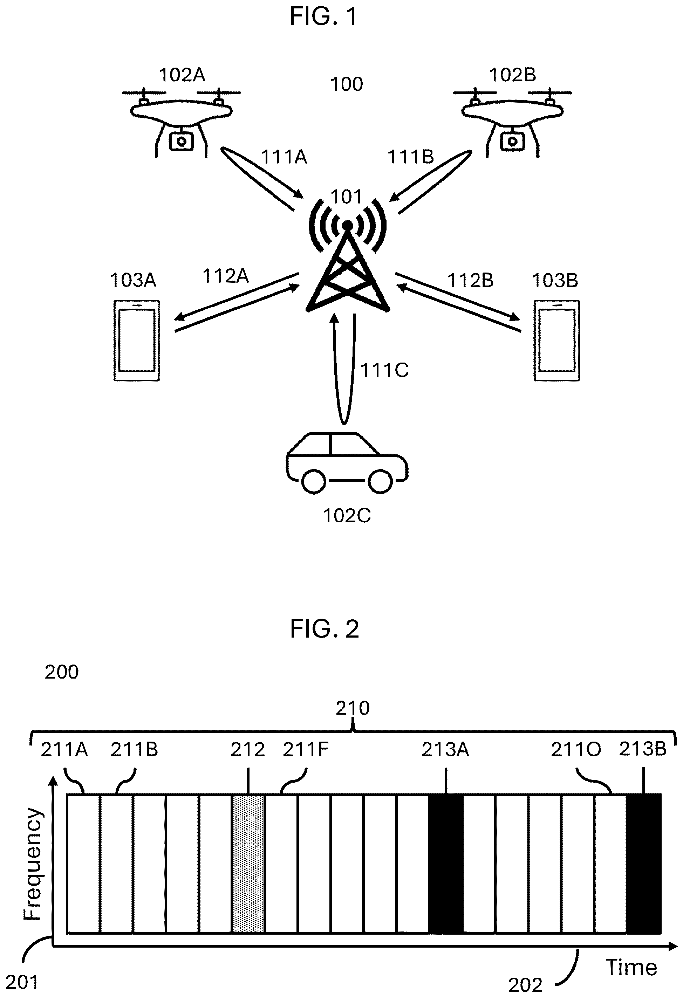

Fig. 1 shows an exemplary telecommunications system 100 comprising a base station 101, one or more sensing targets 102A, 102B, 102C, and one or more communications targets or User Equipments (UEs) 103A, 103B. The system further comprises sensing channels 111A, 111B, 111C and communications channels 112A and 112B.

Although channels are depicted as being between the base station 101 and a sensing or communications target, sensing and communications signals communicated along such channels may be received by any of the targets. In particular, sensing signals communicated along channels 111A, 111B, and 111C may be received by UEs 103A or 103B. As such, if a sensing signal is sent along a sensing channel simultaneously with a communications signal along a communication channel, for example channel 112A, the receiving UE, for example UE 103A, may not be able to decode the communications signal due to interference from the sensing signal.

Fig. 2 shows an exemplary radio resource allocation multiplexing chart 200 with frequency axis 201 and time axis 202. The time axis 202 is divided into a sequence of time slots 210, each of which is a radio resource allocation.

Although time-domain multiplexing is shown, it is contemplated herein that frequency-domain multiplexing may be employed either additionally or alternatively. For example, the frequency axis 201 may additionally or alternatively be divided into a sequence of frequency slots, each of which is a radio resource allocation. If both frequency and time domain multiplexing are employed then a combined time-frequency slot may be a radio resource allocation.

With continued reference to Fig. 2, unshaded time slots, for example time slots 211A, 211B, 211F, and 211O, are communications-only time slots. Partly shaded time slots, for example time slot 212, are sensing-only time slots. Fully shaded time slots, for example time slots 213A and 213B, are combined sensing and communications time slots.

It will be appreciated by the person skilled in the art that the invention is not limited to the specific arrangement of communications-only, sensing-only, and combined time slots depicted, but could be worked with any suitable temporal or frequency-space arrangement of radio resource allocations.

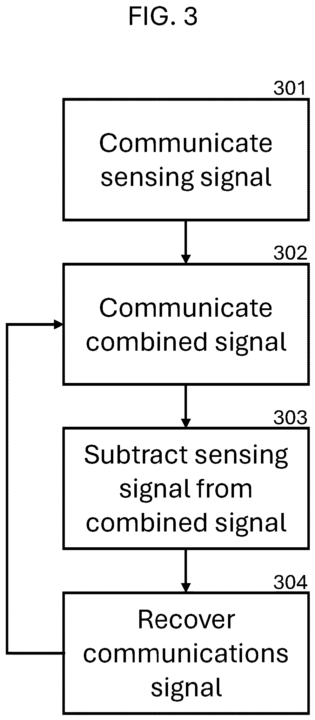

Fig. 3 shows a method 300 of communicating sensing and communication signals between a base station and a user equipment.

At step 301, a first sensing signal is communicated. For example, the base station 101 may transmit a sensing signal. The sensing signal may be communicated through a first sensing channel, for example sensing channel 111A. The communication of the sensing signal may occur in a first radio resource allocation. This first radio resource allocation may be a first time slot, for example time slot 212. The communication of the sensing signal may be a broadcast. That is, the sensing signal may not be communicated with a particular target in mind. Alternatively, the sensing signal may be directed toward a specific target, for example target 102A. The sensing signal may be received by one or more UEs, for example UE 103A and/or UE 103B. For example, UE 103A may receive the first sensing signal via a first communications channel 112A.

At step 302, a combined sensing and communications signal is communicated. This signal may comprise communicating a second sensing signal along a second sensing channel and communicating a first communications signal along a first communications channel. Preferably, the second sensing channel is substantially similar to the first sensing channel. The base station 101 may transmit the sensing and communications signals. The first communications signal may be communicated to a UE, for example UE 103A. The second sensing signal may also be received by the same UE, for example UE 103A. The UE 103A may receive the first communications signal and the second sensing signal through a second communications channel. Preferably, the second communications channel is substantially similar to the first communications channel. More preferably, the second communications channel is identical to the first communications channel. Step 302 may take place during a second radio resource allocation. This second radio resource allocation may be a second time slot, for example time slot 213A.

At step 303, the first sensing signal is subtracted from the combined sensing and communications signal. This may take place on the UE which received the combined sensing and communications signal, for example UE 103A. Provided the first communications channel and second communications channel are substantially similar, this allows for the recovery of the first communications signal at step 304.

The method may then repeat from step 302. The method may repeat an unlimited number of times, provided that the third, fourth, fifth, and so on sensing channels used in the communication of the second, third, fourth, and so on combined sensing and communications signals are substantially similar to the first sensing channel. If the sensing channels used in the communication of the combined sensing and communications signals is found not to be substantially similar to the first sensing channel, the method may instead repeat from step 301 (i.e., the base station may broadcast a sensing signal without a communications signal in a resource allocation and the UE may receive the sensing signal from the base station through the new channel). Alternatively, the method may repeat from step 302 a pre-determined number of times before repeating from step 301.

The method 300 may increase the communication signal rate in telecommunications network 100 substantially. For example, instead of time slots 213A and 213B being used only for sensing, as in prior art networks, they may be used for both sensing and communications. This may increase the communications signal rate in accordance with the number of times the method 300 is repeated from step 302.

To ensure recovery of the communications signal from the combined sensing and communications signal it may be preferable for the second communications channel of the combined signal to be substantially similar to the first communications channel (when only the sensing signal was received). Furthermore, it is preferable for the channel characteristics to be substantially similar. Even if the same channel is used, the channel characteristics may vary from one time slot to the next. The channel characteristics may vary due to changes in the environment. The channel characteristics may vary due to movement of the target.

As such, the system 100 may continuously and/or periodically monitor one or more measures of channel condition. This may be used to determine if the recovered communications signal matches an expected or control communications signal. Additionally or alternatively, this may be used to determine channel similarity. For example, it may be used to determine the similarity of the communications channel of step 301 to the communications channel of step 302. The measure of channel condition may be a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

Although it is shown that communication of a sensing signal at step 301 occurs before communication of a combined signal at 302, the person skilled in the art would understand that communications signals could still be recovered if the steps were be reversed. Thus, the steps may be reversed. For example, one or more combined signals may be transmitted prior to the first sensing signal.

### Blind Interference Alignment (BIA) for ISAC

Another problem addressed by the present disclosure is how to use the radio resources efficiently for communications whilst providing the sensing functionality, where the channel condition changes between the BS and UEs between resource allocations.

To address this problem, the present disclosure provides a Blind interference alignment (BIA) technique. In this technique, the sensing signal is combined with two communication signals, are the combined signal is received at the UE side during three resource allocations. This technique may utilise the radio resources more efficiently compared to allocating a dedicated radio resource for the sensing functionality.

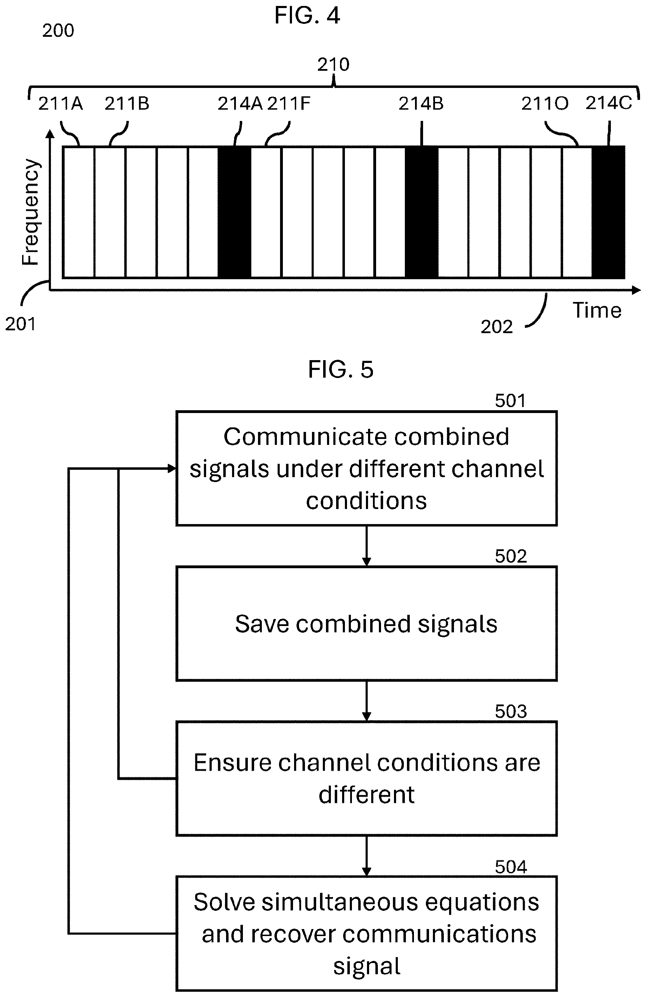

Fig. 4 shows another exemplary radio resource allocation multiplexing chart 200 with frequency axis 201 and time axis 202. The time axis 202 is divided into a sequence of time slots 210 each of which is a radio resource allocation.

As with Fig. 2, although time-domain multiplexing is shown, it is contemplated that frequency-domain multiplexing may be employed either additionally or alternatively.

As with Fig. 2, unshaded time slots in Fig. 4 are communications-only time slots and fully shaded time slots, for example time slots 214A, 214B and 214C, are combined sensing and communications time slots.

In contrast to the embodiment described with reference to Fig. 2, each of the sensing timeslots are combined sensing and communications time slots. There are no sensing-only timeslots. This embodiment therefore further improves the communications efficiency of the network.

It will be appreciated by the person skilled in the art that the invention is not limited to the specific arrangement of communications-only, sensing-only, and combined time slots depicted, but could be worked with any suitable temporal or frequency-space arrangement of radio resource allocations.

In some examples, the radio resource allocation for this technique may be as follows:
at a first radio resource allocated for the sensing functionality (e.g., 214A), a sensing signal and two communication signals may be transmitted (C1+C2+S);
at a second radio resource allocated for the sensing functionality (e.g., 214B), the same previous sensing signal and two communications signals may be transmitted (C1+C2+S); and
at a third radio resource allocated for the sensing functionality (e.g., 214C), the same previous sensing signal and two communications signals may be transmitted (C1+C2+S).

The channel condition of the received signals should be different between radio resource allocations.

Ensuring that the channel condition is different can be done by either knowing the channel has changed, or deliberately changing the channel condition by using different transmit or/and receive antennas, or manipulating the RF components at the transmitter or/and receiver or any other methods.

In some examples, the combined sensing and communications signal C1+C2+S can be transmitted from the whole antenna array. Alternatively, some antennas may transmit S+C1 and other antennas will transmit C2. Alternatively, some antennas will transmit S+C2 and other antennas will transmit C1. Depending on how the antennas in the antenna array are divided, the signal transmitted by each antenna may comprise none, some or all of each of the signal components.

To remove the interference caused by the sensing signal, the UE may perform the following steps:
receive a combined sensing and communications signal through a first channel;
receive the combined sensing and communications signal through a second channel;
receive the combined sensing and communications signal through a third channel;
save the received signals; and
find the values of the component communications signals by solving the saved equations.

It is important to have different channel conditions between the received signals in order to solve the equations. For each received signal, the UE may derive an equation with three variables, where each variable is a component of the signal: sensing signal; first communications signal; and second communications signal. If the channel conditions are the same for each allocation, the UE will derive three equations that will be all the same, which will lead to redundant equations and will not allow the UE to recover the original communication signals.

If the channel conditions between allocations are similar, the equations solved by the UE may be ill-conditioned. Therefore, ensuring that the channel conditions are different may comprise ensuring that a measure of channel difference is above a threshold.

The UE receiver may have a prior knowledge of the wireless channel between the BS and the UE. The UE may use the prior knowledge of the wireless channel to derive the equations with variables that can be solved to derive the communications signal components of the combined signal.

The BS will already know the transmitted sensing signal and the communication signal. Therefore, detecting the reflected sensing signal from the combined signal should not be an issue.

The base station may send a regular header to the UE comprising information regarding where to find the resource allocations and what will be communicated in each one (e.g., which is a control channel). In the proposed methods, this header may be modified to indicate to the UE when it can expect to receive signals that are combined communications and sensing signals (and when it can expect to receive signals that are only communications signals, such as 211A-211O). The base station may further inform the UE when the communications signals in the combined signal will be the same and when they will be changed, so that the UE can formulate the simultaneous equations correctly. The base station may also inform the UE how frequently the scheduling parameters will be changed.

Fig. 5 shows a method 500 of communicating sensing and communication signals between a base station and a user equipment.

At step 501, the base station 101 communicates a first combined sensing and communications signal. The first combined sensing and communications signal may comprise a sensing signal and one or more communications signals. The communication of the combined sensing and communications signal may occur in a first radio resource allocation. This first radio resource allocation may be a first time slot, for example time slot 214A. The combined sensing and communications signal may be received by one or more UEs, for example UE 103A or UE 103B.

At step 502, the UE saves the combined signals. If the UE has only received one copy of the first combined sensing and communications signal, the UE may be unable to recover the one or more communications signals from the combined signal. The UE needs to receive the signal a sufficient number of times via different channels, in order to recover the one or more communications signals. For example, if the first combined sensing and communications signal comprises a sensing signal and two communications signals, the UE must receive the combined signal three times, via three different communications channels. Therefore, if the UE is unable to recover the communications signals, it will wait until more combined signals have been received.

In order for the UE to successfully recover the communications signals, the communications channel (e.g., communications channel 112A) must be different between transmissions. This may be because, if the communications channel is identical, the received signal is identical and therefore no new information is provided. Whereas, if the communications channel is different the UE may derive a new equation relating the component signals of the combined signal. Once the UE has derived enough equations that the component signals are uniquely defined, the UE can proceed to solve the equations and recover the communications signals.

At step 503, the system ensures that the channel conditions for communicating the next combined signal are different to the channel conditions for communicating the previous combined signal. Ensuring that the channel conditions are different may comprise actively modifying the channel conditions. Alternatively, ensuring that the channel conditions are different may comprise testing the channel. The channel conditions may have changes between the timeslots due to a number of factors, such as UE mobility, or due to changes in physical obstructions and/or atmospheric conditions due to weather. The channel conditions may be actively modified if they have not sufficiently changed compared to the previous channel(s) through which the combined signal was communicated (e.g., through antenna adjustments). In some examples, the base station 101 may change the channel condition by using a different part of the transmit antenna or modifying an RF component of the carrier signal. In some other examples, the UE may change the channel condition by using one or more different antennas.

Once a sufficient number of combined signals have been received and saved, the UE solves simultaneous equations and recovers the communications signals at step 504. This may take place on the UE which received the combined sensing and communications signals, for example UE 103A.

The method may then repeat from step 501, with different communications signals. The method may repeat an unlimited number of times. The sensing signal must be identical for each signal in the set of transmissions that are used to solve simultaneous equations but may be changed between sets (i.e., when the communications signals are also changed).

The method may increase the communication signal rate in telecommunications network substantially. For example, instead of time slots 214A, 214B and 214C being used only for sensing, as in prior art networks, they may be used for both sensing and communications. This may increase the communications signal rate.

As mentioned above, the standard inference alignment method request that the channel conditions/characteristics to be substantially similar between allocations. In contrast, in the Blind Interference Alignment method, recovery of the communications signal from the combined sensing and communications signals requires that the communications channel of the combined signal is substantially different between each transmission of the combined signal. The Blind Interference Alignment method may therefore be preferable to the standard inference alignment method in scenarios where the channel conditions/characteristics are highly variable.

In the Blind Interference Alignment method, as with the standard inference alignment method, the system 100 may continuously and/or periodically monitor one or more measures of channel condition. This may be used to determine whether the channel needs to be modified before transmitting a signal. The measure of channel condition may be a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

Whilst the examples provided in this disclosure combine a sending signal with two communication signals, the invention is not limited to two communication signals. Alternatively, the sensing signal may be combined with only one other communication signal and received during two resource allocations. Alternatively, the sensing signal may be combined with three communication signals and received during four resource allocations, and so one. The proposed ISAC BIA technique may be generalised, as long as the UE is able to derive sufficient different equations at the receiver (because of different channel conditions between resource allocations).

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific networks in some examples, (such as a 4G/LTE or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non- claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.

In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of communicating sensing and communication signals between a base station and a user equipment, the method comprising:
a) communicating, during a first radio resource allocation of a sequence of radio resource allocations allocated for sensing, a first signal comprising a sensing signal;
b) communicating, during a further radio resource allocation of the sequence, a second signal comprising the sensing signal and a communication signal.

2. The method of claim 1, further comprising:
repeating step b) one or more times during one or more radio resource allocations of the sequence;
periodically determining a measure of channel condition; and
if the measure of channel condition is outside a pre-determined range, repeating step a) and beginning a new sequence of radio resource allocations allocated for sensing.

3. The method of claim 2, wherein the measure of channel condition is one or more of a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

4. The method of any of claim 2 or claim 3, wherein the pre-determined range is decided according to a scheduler of the base station and/or ensures data transmission by binary phase shift keying.

5. The method of claim 1, further comprising:
repeating step b) a predetermined number of times; and
repeating step a) and beginning a new sequence of radio resource allocations allocated for sensing.

6. The method of any of claims 1 to 5, wherein the first radio resource allocation is temporally prior to the further radio resource allocation.

7. The method of any of claims 1 to 5, wherein the first radio resource allocation is temporally subsequent to one or more of the further radio resource allocations.

8. The method of any of claims 1 to 7, further comprising subtracting the signal of step a) of a given sequence of radio resource allocations allocated for sensing from the signal of any performance of step b) of the given sequence to produce a resultant communication signal.

9. A user equipment of an integrated sensing and communications network for carrying out the method of any of claims 1 to 8.

10. A base station of an integrated sensing and communications network for carrying out the method of any of claims 1 to 7.

11. Computer software comprising instructions that, when executed by a processor, causes the processor to perform the method of any of claims 1 to 8.
